# FASCICULE DE BREVET EUROPEEN

(11) **EP 4 046 741 B1**
(45) Date de publication et mention de la délivrance du brevet: **01.11.2023**
(21) Numéro de dépôt: 21158746.4
(22) Date de dépôt: 23.02.2021
(51) Int. Cl.: B23K 26/0622, B23K 26/082, B23K 26/362, B44C 1/22

(54) **PROCEDE D'USINAGE LASER D'UN COMPOSANT HORLOGER**
VERFAHREN ZUR LASERBEARBEITUNG EINER UHRENKOMPONENTE
METHOD FOR LASER MACHINING OF A TIMEPIECE COMPONENT

(43) Date de publication de la demande: 24.08.2022
(73) Titulaire: DM Surfaces SA, 2610 Saint-Imier (CH)
(72) Inventeur: SPECHT, Tristan, 67700 Saverne (FR); GIL VILLALBA, Abel, 2610 Saint-Imier (CH); FAVRE, Raynald, 2300 La Chaux-de-Fonds (CH)
(74) Mandataire: e-Patent SA

(56) Documents cités:
- WO-A1-2013/135703

## Description

### Domaine technique

La présente invention concerne un procédé d'usinage laser d'un substrat pour composant horloger, au moyen d'une source laser destinée à émettre des impulsions de durée égale ou inférieure à la picoseconde et agencée pour définir un faisceau laser incident mobile relativement au substrat et réaliser une gravure sur ce dernier, comportant les étapes consistant à:
- se munir d'un substrat métallique ou en céramique à graver,
- programmer la source laser pour définir au moins un premier vecteur de gravure sur le substrat, délimité par un point de départ et un point d'arrivée, tous deux situés en périphérie de la gravure, et composé d'un trajet à parcourir par le faisceau laser incident relativement au substrat et d'une série d'impacts du faisceau laser incident le long du trajet.

### Etat de la technique

Des nombreux procédés de traitement de composants horlogers par faisceau laser sont déjà connus de l'état de la technique.

Ainsi, par exemple, la demande de brevet EP 2825347 A1 décrit un tel procédé permettant d'usiner un composant horloger, plus particulièrement de le graver au moyen d'un faisceau laser dont les propriétés permettent simultanément de changer la coloration du composant sur le trajet du faisceau laser.

La figure 3 de cette demande de brevet, partiellement reproduite dans la figure 1a annexée ici, illustre une vue en coupe transversale du substrat gravé par la mise en oeuvre de ce procédé, la forme de la gravure ainsi obtenue étant conventionnelle. En particulier, la section des flancs périphériques de la gravure est droite et présente une jonction avec le fond de la gravure définissant un angle droit parfait.

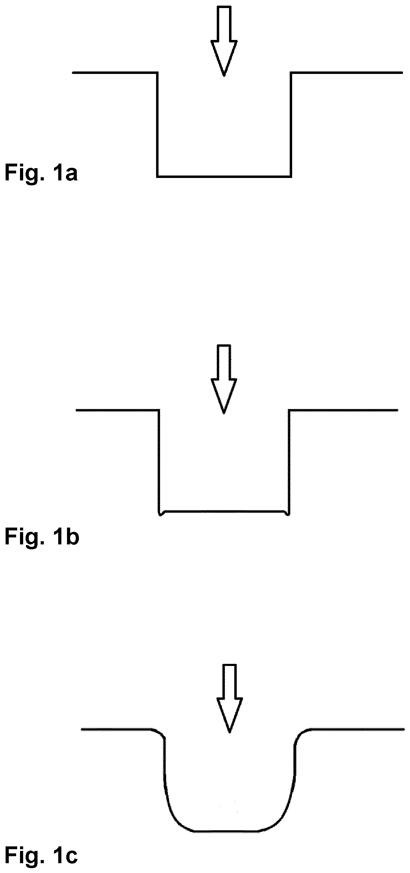

Dans la pratique, la jonction est rarement aussi propre et parfaite. En effet, pour réaliser une gravure, la source laser utilisée est typiquement programmée au moyen de vecteurs de gravure adjacents ou partiellement superposés, dont chacun est délimité par un point de départ et un point d'arrivée, tous deux situés en périphérie de la gravure à réaliser, et est composé d'un trajet à parcourir sur le substrat par le faisceau laser incident émis sous forme d'impulsions par la source laser, et d'une série d'impacts correspondants du faisceau laser incident le long de ce trajet. Par défaut, le déplacement relatif entre le faisceau laser incident et le substrat et l'émission des impulsions laser démarrent de manière simultanée. Du fait de la fréquence d'impulsions laser relativement élevée, de l'ordre de la centaine de kilohertz, il en résulte un taux de recouvrement longitudinal très élevé en début de vecteur, soit une superposition importante des premiers impacts et, en pratique, la formation d'une creusure en périphérie de la gravure. Un phénomène similaire intervient en fin de vecteur puisque l'émission des impulsions laser cesse typiquement en même temps que le déplacement du faisceau laser incident, donnant lieu à une superposition importante des derniers impacts sur le substrat. Par conséquent, la forme de la gravure obtenue en pratique ressemble davantage à celle illustrée sur la figure 1b qu'à celle de la figure 1a, théorique.

Si l'étendue de ces défauts reste limitée, de l'ordre de quelques dizaines de microns, et est donc difficilement détectable à l'oeil nu, elle peut être observée lors d'un examen minutieux, notamment avec une loupe, et convient mal à la réalisation de composants horlogers de haut de gamme dont les acheteurs peuvent être exigeants.

On notera par ailleurs que de telles gravures étaient auparavant réalisées par attaque chimique et présentaient alors un profil légèrement différent, comme illustré sur la figure 1c. On constate en effet que la gravure chimique donne lieu à une jonction incurvée entre les flancs de la gravure et son fond. On notera également que l'attaque chimique est encore utilisée pour la réalisation de certains composants dans le haut de gamme parce qu'elle donne un résultat moins parfait mais d'apparence plus artisanale que l'usinage laser, en mettant en évidence l'intervention de la main de l'homme, par opposition à l'usinage laser, considéré comme un procédé purement industriel.

### Divulgation de l'invention

Un but principal de la présente invention est de proposer un procédé alternatif aux procédés de gravure de composants horlogers par faisceau laser connus de l'art antérieur, le procédé selon l'invention permettant la réalisation d'une gravure sur un composant horloger présentant une apparence proche de celle obtenue par la mise en oeuvre d'une attaque chimique, et donc avec une qualité perçue élevée.

A cet effet, la présente invention concerne plus particulièrement un procédé d'usinage d'un substrat pour composant horloger du type mentionné plus haut, caractérisé par le fait que la source laser est programmée de telle manière
que la première impulsion associée au premier impact du faisceau laser incident sur le substrat soit émise après que le faisceau laser ait quitté le point de départ pour commencer son déplacement relativement au substrat, et
que la dernière impulsion associée au dernier impact du faisceau laser incident sur le substrat soit émise avant que le faisceau laser incident ait atteint le point d'arrivée et achevé de se déplacer relativement au substrat.

Le substrat à traiter peut être un composant horloger en tant que tel ou seulement une portion d'un composant horloger, soit réalisé d'une pièce avec le reste du composant, soit rapporté sur le reste du composant avant ou après la mise en oeuvre du procédé selon l'invention, sans sortir du cadre de cette dernière.

Grâce à ces caractéristiques, il est possible de réaliser une gravure présentant une jonction incurvée entre les flancs et le fond, et donc une apparence similaire à celle réalisée par attaque chimique. Le procédé selon l'invention permet de réaliser une telle gravure avec un contrôle très précis, donc avec une bonne reproductibilité et une excellente résolution, de l'ordre de quelques micromètres.

De manière préférée, la période initiale entre le début du déplacement relatif, entre le faisceau laser incident et le substrat, et la première impulsion définit un décalage temporel compris entre 2 et 20 µs, préférablement entre 5 et 15 µs.

Par ailleurs, la période finale entre la dernière impulsion et la fin du déplacement relatif, entre le faisceau laser incident et le substrat, définit un décalage temporel préférablement compris entre 5 et 50 µs, préférablement entre 10 et 40 µs.

De manière générale, on peut avantageusement prévoir
que le trajet du faisceau laser incident présente au moins trois phases, une première phase d'accélération relative entre le faisceau laser incident et le substrat, une deuxième phase de déplacement relatif à vitesse sensiblement constante, et une troisième phase de décélération relative, et
que la source laser soit programmée de telle manière que les impacts présentent un taux de recouvrement longitudinal sensiblement constant au cours de la deuxième phase, compris entre 40 et 99%, le taux de recouvrement longitudinal étant variable au cours des première et troisième phases.

De manière générale, on peut prévoir que la source laser soit programmée pour définir au moins un deuxième vecteur agencé de telle manière que les impacts respectifs des premier et deuxième vecteurs présentent un taux de recouvrement latéral compris entre 40 et 99%.

De manière générale, on peut prévoir que le faisceau laser incident soit composé d'impulsions présentant une fréquence moyenne comprise entre 100 et 1000 kHz.

Par ailleurs, on peut avantageusement prévoir que la source laser soit agencée de telle manière que le faisceau laser incident présente une énergie d'impulsion comprise entre 1 et 50 µJ.

De manière générale, on peut prévoir que la source laser soit agencée de telle manière que la vitesse du déplacement relatif entre le faisceau laser incident et le substrat soit comprise entre 500 et 3000 mm/s.

Selon un mode de réalisation préféré, on peut prévoir que le substrat comporte un ou plusieurs des matériaux pris dans le groupe comprenant: les aciers, y compris les aciers inoxydables, le titane, le cuivre, le laiton, l'or, le platine, le tungstène, les céramiques.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemple non limitatif et dans lesquels:
- les figures 1a et 1b représentent des vues en coupe transversale schématiques de gravures obtenues par la mise en oeuvre de procédés selon l'état de la technique, tandis que la figure 1c représente une vue similaire d'une gravure obtenue par la mise en oeuvre d'un procédé selon un mode de réalisation préféré de la présente invention;
- la figure 2 représente un schéma de principe simplifié d'une source laser permettant la mise en oeuvre du procédé selon la présente invention, et
- les figures 3a et 3b représentent des schémas de principe simplifiés illustrant le comportement du faisceau laser effectuant une gravure, respectivement selon l'état de la technique et selon la présente invention.

### Mode(s) de réalisation de l'invention

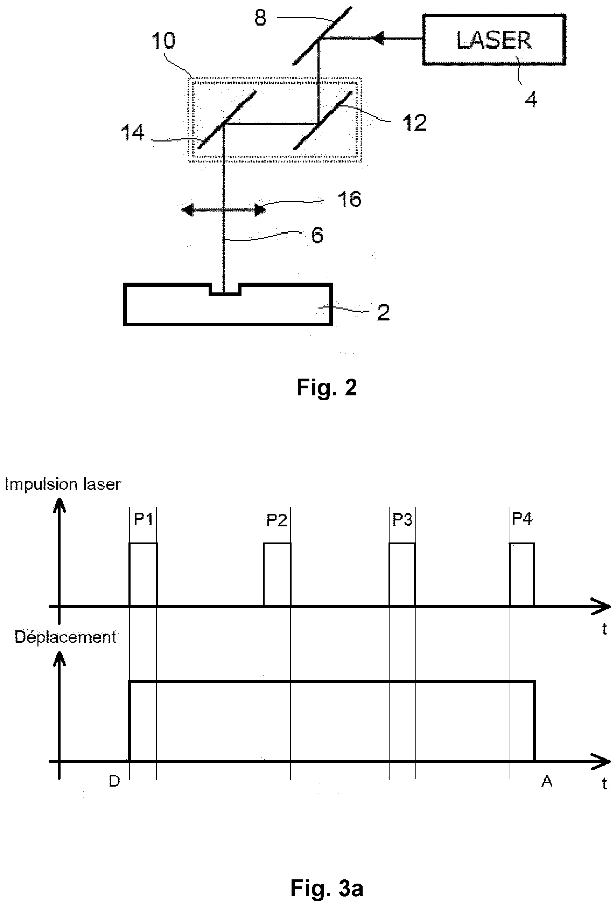

La figure 2 représente un schéma de principe simplifié d'un exemple de mise en oeuvre d'un procédé d'usinage d'un composant horloger selon un mode de réalisation préféré de la présente invention.

Plus précisément, le procédé d'usinage par faisceau laser selon la présente invention vise à graver un substrat 2 pour un composant horloger (non représenté dans son intégralité), ce substrat 2 absorbant avantageusement au moins partiellement la lumière du faisceau laser à la longueur d'onde du faisceau laser utilisé pour réaliser l'usinage, préférablement entre 500 et 1100 nm. Ainsi, de manière générale, on pourra mettre en oeuvre le procédé selon l'invention en relation avec toutes sortes de matériaux susceptibles d'être gravés par laser, et le substrat pourra comporter un ou plusieurs des matériaux pris dans le groupe comprenant: les aciers, y compris les aciers inoxydables, le titane, le cuivre, le laiton, l'or, le platine, le tungstène, les céramiques, à titre illustratif non limitatif.

Le substrat 2 peut être directement un composant horloger en tant que tel ou seulement une portion d'un composant horloger, soit réalisée d'une pièce avec le reste du composant, soit rapportée sur le reste du composant, sans sortir du cadre de l'invention.

Par ailleurs, on pourra prévoir que le composant horloger soit directement visible sur la pièce d'horlogerie correspondante, en étant situé à l'extérieur de la boite ou à l'intérieur mais en étant visible au travers d'une glace, ou il peut être logé à l'intérieur de la boite et n'être au moins partiellement visible qu'une fois celle-ci ouverte.

De manière générale, pour réaliser l'usinage selon l'invention, on utilise une première source laser 4 agencée, en relation avec un dispositif optique, pour définir un faisceau laser incident 6 destiné à réaliser une gravure sur le substrat 2 du composant horloger.

Plus précisément, le dispositif optique peut comporter, à titre illustratif non limitatif, au moins un premier miroir 8 agencé en sortie de la première source laser 4, cette dernière pouvant typiquement être associée à une tête galvanométrique 10 comprenant un jeu de miroirs supplémentaires, ici schématisés sous la forme de deux miroirs 12 et 14, permettant de contrôler la direction de propagation du faisceau laser incident 6 et de faire faire un balayage à ce dernier pour réaliser la gravure sur le substrat 2, selon l'invention. Le dispositif optique comporte également, de manière avantageuse, un dispositif de focalisation 16, schématisé ici sous la forme d'une lentille convergente pour définir un plan de focalisation souhaité pour le faisceau laser incident 6. En alternative ou en complément, il est possible de prévoir un support mobile pour le substrat 2, pour pouvoir le déplacer relativement au faisceau laser incident, sans sortir du cadre de la présente invention.

De manière avantageuse, la première source laser 4 peut être associée au dispositif optique directement à l'intérieur d'une machine à commande numérique multi-axes.

Lorsqu'une machine à commande numérique est utilisée, elle est avantageusement programmée pour contrôler le faisceau laser incident 6 et ses déplacements de façon appropriée pour procéder à une gravure du substrat 2 suivant un trajet prédéfini. La machine à commande numérique comporte typiquement un dispositif de pilotage, à cet effet, prenant en compte la géométrie du substrat 2 et de la gravure à réaliser, et définissant la vitesse de balayage de la surface à traiter par le faisceau laser incident 6 ainsi que l'amplitude de mouvement du faisceau et la génération des impulsions laser, de manière à obtenir la gravure souhaitée. De manière avantageuse, l'ensemble de la gravure sur le substrat 2 peut être réalisé en une seule opération.

De manière avantageuse, la première source laser est choisie de telle manière qu'elle définisse un faisceau laser incident 6 composé d'impulsions lumineuses dont la durée est de l'ordre de grandeur de la picoseconde ou de la femtoseconde. De plus, le dispositif optique est préférablement agencé de telle manière que le faisceau laser incident 6 présente un plan focal situé sensiblement à la surface du substrat 2.

Typiquement, pour traiter des substrats tels que ceux mentionnés plus haut, on pourra choisir une première source laser 4 telle que le faisceau laser incident 6 soit composé d'impulsions présentant une fréquence moyenne comprise entre 100 et 1000 kHz, et telle que ce dernier présente une puissance moyenne comprise entre 1 et 20 Watts, préférablement entre 1 et 10 Watts. En outre, on peut avantageusement prévoir que le faisceau laser incident présente une énergie d'impulsion comprise entre 1 et 50 µJ et que la vitesse du déplacement relatif entre le faisceau laser incident et le substrat soit comprise entre 500 et 3000 mm/s. Ces différents paramètres peuvent avantageusement être affinés pour prendre en compte la composition du substrat.

Le nombre d'impulsions à appliquer par mm² pour réaliser une gravure selon l'invention dépend notamment de la fluence énergétique du faisceau laser utilisé, de sa fréquence, de la distance de balayage et de la vitesse de balayage. Typiquement, la réalisation d'une gravure basique sur un composant horloger peut nécessiter de 10³ à 10⁶ impulsions par mm², soit de 10⁵ à 10⁸ impulsions pour un motif de 1 cm².

De manière préférée, la gravure est réalisée par une programmation adéquate de la source laser (dans son acception large, c'est-à-dire en incluant le dispositif optique et/ou un support mobile permettant d'induire un déplacement relatif entre le faisceau incident et le substrat), autrement dit en définissant au moins un vecteur, préférablement une pluralité de vecteurs, dont chacun est délimité par un point de départ et un point d'arrivée et composé d'un trajet à parcourir par le faisceau laser incident 6 relativement au substrat 2, et d'une série d'impacts du faisceau laser incident 6 le long du trajet.

Le procédé selon la présente invention concerne indifféremment la réalisation de gravures par simples passes ou par passes multiples, préférablement croisées ("cross-hatch") pour assurer une uniformité du profil de gravure sur l'ensemble de la portion usinée.

La figure 3a représente deux diagrammes schématiques illustrant un vecteur de gravure typique selon l'art antérieur, permettant la réalisation d'une gravure comme celles illustrées sur les figures 1a et 1b.

Ce vecteur de gravure est délimité par un point de départ D et un point d'arrivée A, entre lesquels le faisceau laser et le substrat présentent un déplacement relatif pour définir un trajet suivi par le faisceau laser incident sur le substrat. Le faisceau laser incident est composé d'impulsions laser de fréquence prédéfinie, ici au nombre de quatre à titre d'exemple schématique, soit les impulsions P1 à P4 illustrées sur le diagramme supérieur de la figure 3a. La source laser est programmée pour que le faisceau laser incident se déplace le long du trajet ainsi défini, comme cela apparait du diagramme inférieur de la figure 3a.

Typiquement, comme cela ressort de la figure 3a, le déplacement relatif entre le substrat et le faisceau laser incident et les impulsions laser démarrent en même temps et s'arrêtent en même temps.

La Demanderesse a pris le contre-pied d'une tendance universelle dans le domaine technique de l'usinage laser selon laquelle la recherche vise à mettre au point des procédés d'usinage grâce auxquels des gravures peuvent être réalisées qui s'approchent de la perfection en terme d'aspect, notamment des flancs parfaitement droits. En effet, la Demanderesse a effectué des recherches pour pouvoir définir des conditions spécifiques d'usinage laser d'un composant pour l'horlogerie grâce auxquelles la gravure obtenue ne serait pas parfaite au sens industriel mais ressemblerait plutôt au résultat obtenu par mise en oeuvre d'un procédé plus artisanal comme l'attaque chimique.

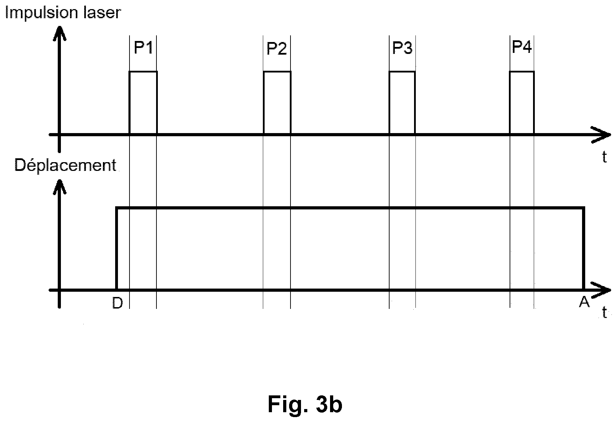

Les résultats de ces recherches ressortent de manière schématique de la figure 3b qui représente deux diagrammes schématiques illustrant un vecteur de gravure selon la présente invention, permettant la réalisation d'une gravure comme celle illustrée sur la figure 1c.

On constate de la figure 3b que le déplacement relatif entre le substrat et le faisceau laser incident, à partir du point de départ D, commence avant que la source laser n'émette la première impulsion laser P1. De même, le déplacement relatif jusqu'au point d'arrivée A se termine après l'émission de la dernière impulsion laser P4 du vecteur illustré.

De manière préférée, la période initiale entre le début du déplacement relatif, entre le faisceau laser incident et le substrat, et la première impulsion P1 définit un décalage temporel compris entre 2 et 20 µs, préférablement entre 5 et 15 µs. Par ailleurs, la période finale entre la dernière impulsion et la fin du déplacement relatif, entre le faisceau laser incident et le substrat, définit un décalage temporel préférablement compris entre 5 et 50 µs, préférablement entre 10 et 40 µs.

Ainsi, le trajet (relatif) du faisceau laser incident sur le substrat présente au moins trois phases, une première phase d'accélération relative entre le faisceau laser incident et le substrat, une deuxième phase de déplacement relatif à vitesse sensiblement constante, et une troisième phase de décélération relative.

La source laser est préférablement programmée de telle manière que les impacts présentent un taux de recouvrement longitudinal sensiblement constant au cours de la deuxième phase, compris entre 40 et 99%, le taux de recouvrement longitudinal étant variable au cours des première et troisième phases.

Lorsque le procédé d'usinage comporte au moins un deuxième vecteur, celui-ci est avantageusement agencé de telle manière que les impacts respectifs des premier et deuxième vecteurs présentent un taux de recouvrement latéral également compris entre 40 et 99%.

De manière avantageuse, mais optionnelle, on peut prévoir une étape supplémentaire de traitement de surface par laser de la gravure réalisée selon la description qui précède. Plus précisément, on peut préférablement prévoir que cette étape supplémentaire de traitement de la gravure permette d'en modifier la micro-structuration, au moins en surface, notamment pour qu'elle présente au moins un éclat métallique, voire pour que sa coloration soit modifiée de manière à présenter une nouvelle coloration prédéfinie.

Pour réaliser de telles colorations de la gravure, notamment de son fond, on soumet celle-ci à l'action d'un laser à durée d'impulsions brève ou ultrabrève, par exemple une source laser de type nanoseconde définissant, en association avec un dispositif optique non illustré, un faisceau laser de retraitement, agissant comme une source de chaleur qui réagit avec l'oxygène de l'environnement pour revêtir la surface traitée d'une couche d'oxyde transparent ou semi-transparent. En fonction des paramètres du faisceau laser de retraitement tels que sa puissance, sa fréquence, sa largeur d'impulsion, la vitesse de balayage, la fréquence de hachage, le nombre de répétitions ou la distance entre la surface traitée et le plan focal du faisceau laser de retraitement, entre autres, la couche d'oxyde aura une certaine épaisseur. En éclairant ensuite la gravure avec de la lumière blanche, la radiation est réfléchie par les couches supérieures et inférieures d'oxyde. En conséquence, un phénomène d'interférence des rayons réfléchis est perçu par un observateur comme correspondant à une couleur déterminée.

D'autres procédés de traitement connus pourront être mis en oeuvre, en complément ou en alternative, sans sortir du cadre de l'invention tel que défini par les revendications annexées.

Selon une variante de réalisation préférée, un procédé particulier mis au point par la Demanderesse et visant à noircir la gravure réalisée selon la présente invention peut être mis en oeuvre.

Ce procédé consiste en un traitement laser de la gravure, au moyen d'une source laser destinée à émettre des impulsions de durées égales ou inférieures à la picoseconde et agencée pour définir un faisceau laser incident mobile relativement à la gravure et réaliser un traitement de cette dernière pour en noircir au moins une portion de manière sélective. Plus précisément, ce procédé de noircissement peut avantageusement comporter les étapes consistant à:
- mettre en oeuvre une première opération de traitement laser visant à balayer la portion à traiter avec un faisceau laser incident, suivant un premier jeu de paramètres prédéfini, adapté pour noircir la portion à traiter en créant des microstructures et des nanostructures sur essentiellement toute sa surface,
- mettre en oeuvre une deuxième opération de traitement laser visant à balayer la portion à traiter avec un faisceau laser incident, suivant un deuxième jeu de paramètres prédéfini, différent du premier jeu de paramètre prédéfini et adapté pour lisser la surface de la portion à traiter, par réduction de la rugosité de la surface de la portion à traiter d'au moins 40%, préférablement d'au moins 50%,
- mettre en oeuvre une troisième opération de traitement laser visant à balayer la portion à traiter avec un faisceau laser incident, suivant un troisième jeu de paramètres prédéfini, similaire au premier jeu de paramètres prédéfini et adapté pour noircir la portion à traiter en recréant des microstructures et des nanostructures sur essentiellement toute sa surface.

De manière avantageuse, on peut prévoir que le premier jeu de paramètres prédéfini inclue une valeur de fluence comprise entre 0.05 et 0.35 J/cm².

De manière alternative ou complémentaire, on peut avantageusement prévoir que le premier jeu de paramètres prédéfini inclue une valeur de taux de recouvrement longitudinal supérieure ou égale à 65% et strictement inférieure à 100%, préférablement comprise entre 65% et 85%.

De manière alternative ou complémentaire, on peut avantageusement prévoir que le deuxième jeu de paramètres prédéfini inclue une valeur de fluence comprise entre 0.15 et 1 J/cm².

De manière alternative ou complémentaire, on peut avantageusement prévoir que le deuxième jeu de paramètres prédéfini inclue une valeur de taux de recouvrement longitudinal supérieure ou égale à 85% et strictement inférieure à 100%, préférablement supérieure ou égale à 90% et inférieure à 99%.

De manière alternative ou complémentaire, on peut avantageusement prévoir que le troisième jeu de paramètres prédéfini inclue une valeur de fluence comprise entre 0.05 et 0.35 J/cm².

De manière alternative ou complémentaire, on peut avantageusement prévoir que le troisième jeu de paramètres prédéfini inclue une valeur de taux de recouvrement longitudinal supérieure ou égale à 65% et strictement inférieure à 100%, préférablement comprise entre 65% et 85%.

Selon une variante de réalisation préférée, on peut prévoir qu'au cours de la première opération et/ou de la troisième opération, la source laser soit agencée pour émettre des impulsions laser en mode "burst", en étant réparties en des groupes d'impulsions successifs, avec une période de groupe P, les impulsions d'un groupe donné étant émises pendant 20 à 100% de la période P.

Selon un mode de réalisation préféré, on peut avantageusement prévoir que le procédé comporte une étape supplémentaire consistant à mettre en oeuvre une quatrième opération de traitement laser visant à balayer au moins une partie de la paroi périphérique incurvée de la gravure avec un faisceau laser incident, suivant un quatrième jeu de paramètres prédéfini, différent des premier, deuxième et troisième jeux de paramètres prédéfinis et adapté pour noircir la paroi périphérique en créant des microstructures et des nanostructures sur essentiellement toute sa surface.

Grâce à cette étape supplémentaire, les parois de la gravure sont également au moins partiellement noircies, conférant ainsi un aspect qualitatif amélioré au produit final.

Dans ce cas, on peut avantageusement prévoir que le quatrième jeu de paramètres prédéfini inclue une valeur de fluence comprise entre 0.10 et 0.25 J/cm².

En outre, on peut avantageusement prévoir dans ce cas, de manière alternative ou complémentaire, que le quatrième jeu de paramètres prédéfini inclue une valeur de taux de recouvrement longitudinal supérieure ou égale à 85% et strictement inférieure à 100%, préférablement supérieure ou égale à 90% et inférieure à 99%.

La mise en oeuvre de la présente invention n'est pas limitée à un composant horloger faisant partie de l'habillage d'une pièce d'horlogerie. En effet, tout composant horloger peut permettre la mise en oeuvre de la présente invention pour conférer un caractère distinctif au composant horloger et donc à la pièce d'horlogerie correspondante. L'homme du métier ne rencontrera aucune difficulté particulière pour adapter le présent enseignement à la fabrication de composants horlogers d'habillage ou du mouvement horloger.

La description qui précède s'attache à décrire un mode de réalisation particulier à titre d'illustration non limitative et, l'invention n'est pas limitée à la mise en oeuvre de certaines caractéristiques particulières qui viennent d'être décrites, comme par exemple la nature du composant horloger ou encore la matière dans laquelle il est réalisé.

## Revendications

1. Procédé d'usinage laser d'un substrat (2) pour composant horloger, au moyen d'une source laser (4, 8, 10) destinée à émettre des impulsions (P1,.., P4) de durée égale ou inférieure à la picoseconde et agencée pour définir un faisceau laser incident (6) mobile relativement audit substrat (2) et réaliser une gravure sur ce dernier, comportant les étapes consistant à:
- se munir d'un substrat (2) métallique ou en céramique à graver,
- programmer ladite source laser (4, 8, 10) pour définir au moins un premier vecteur de gravure sur ledit substrat (2), délimité par un point de départ (D) et un point d'arrivée (A), tous deux situés en périphérie de la gravure, et composé d'un trajet à parcourir par ledit faisceau laser incident (6) relativement audit substrat (2) et d'une série d'impacts dudit faisceau laser incident (6) sur ledit substrat (2), le long dudit trajet,
**caractérisé en ce que** ladite source laser (4, 8, 10) est programmée de telle manière
que la première impulsion (P1) associée au premier impact dudit faisceau laser incident (6) sur ledit substrat (2) soit émise après que ledit faisceau laser incident (6) ait quitté ledit point de départ (D) pour commencer son déplacement relativement audit substrat (2), et
que la dernière impulsion (P4) associée au dernier impact dudit faisceau laser incident (6) sur ledit substrat (2) soit émise avant que ledit faisceau laser incident (6) ait atteint ledit point d'arrivée (A) et achevé de se déplacer relativement audit substrat (2).

2. Procédé selon la revendication 1, **caractérisé en ce que** la période initiale entre le début du déplacement relatif, entre ledit faisceau laser incident (6) et ledit substrat (2), et ladite première impulsion (P1) définit un décalage temporel compris entre 2 et 20 µs, préférablement entre 5 et 15 µs.

3. Procédé selon la revendication 1 ou 2, **caractérisé en ce que** la période finale entre ladite dernière impulsion (P4) et la fin du déplacement relatif, entre ledit faisceau laser incident (6) et ledit substrat (2), définit un décalage temporel compris entre 5 et 50 µs, préférablement entre 10 et 40 µs.

4. Procédé selon l'une des revendications précédentes, **caractérisé**
**en ce que** ledit trajet présente au moins trois phases, une première phase d'accélération relative entre ledit faisceau laser incident (6) et ledit substrat (2), une deuxième phase de déplacement relatif à vitesse sensiblement constante, et une troisième phase de décélération relative, et
**en ce que** ladite source laser (4, 8, 10) est programmée de telle manière que lesdits impacts présentent un taux de recouvrement longitudinal sensiblement constant au cours de ladite deuxième phase, compris entre 40 et 99%, le taux de recouvrement longitudinal étant variable au cours des première et troisième phases.

5. Procédé selon l'une des revendications précédentes, **caractérisé en ce que** ladite source laser (4, 8, 10) est programmée pour définir au moins un deuxième vecteur agencé de telle manière que les impacts respectifs desdits premier et deuxième vecteurs présentent un taux de recouvrement latéral compris entre 40 et 99%.

6. Procédé selon l'une des revendications précédentes, **caractérisé en ce que** ledit faisceau laser incident (6) est composé d'impulsions présentant une fréquence moyenne comprise entre 100 et 1000 kHz.

7. Procédé selon l'une des revendications précédentes, **caractérisé en ce que** ledit faisceau laser incident (6) présente une puissance moyenne comprise entre 1 et 20 Watts, préférablement entre 1 et 10 Watts.

8. Procédé selon l'une des revendications précédentes, **caractérisé en ce que** ladite source laser (4, 8, 10) est agencée de telle manière que ledit faisceau laser incident (6) présente une énergie d'impulsion comprise entre 1 et 50 µJ.

9. Procédé selon l'une des revendications précédentes, **caractérisé en ce que** ladite source laser (4, 8, 10) est agencée de telle manière que la vitesse du déplacement relatif entre ledit faisceau laser incident (6) et ledit substrat (2) est comprise entre 500 et 3000 mm/s.

10. Procédé selon l'une des revendications précédentes, **caractérisé en ce que** ledit substrat (2) comporte un ou plusieurs des matériaux pris dans le groupe comprenant: les aciers, y compris les aciers inoxydables, le titane, le cuivre, le laiton, l'or, le platine, le tungstène, les céramiques.

## Patentansprüche

1. Verfahren zur Laserbearbeitung eines Substrats (2) für ein Uhrenbauteil mittels einer Laserquelle (4, 8, 10), die dazu bestimmt ist, Impulse (P1, ..., P4) mit einer Dauer gleich oder weniger als eine Pikosekunde auszusenden, und die so beschaffen ist, dass sie einen einfallenden Laserstrahl (6) definiert, der relativ zu dem Substrat (2) beweglich ist, und eine Gravur auf diesem letzteren durchführt, mit den Schritten, die darin bestehen:
- Bereitstellen eines zu gravierenden metallischen oder keramischen Substrats (2),
- Programmieren der Laserquelle (4, 8, 10), um mindestens einen ersten Gravurvektor auf dem Substrat (2) zu definieren, der durch einen Startpunkt (D) und einen Endpunkt (A) begrenzt ist, die sich beide am Umfang der Gravur befinden, und aus einem Weg, der von dem einfallenden Laserstrahl (6) relativ zu dem Substrat (2) durchlaufen werden muss, und aus einer Reihe von Einschläge des einfallenden Laserstrahls (6) auf dem Substrat (2) entlang des Weges besteht,
**dadurch gekennzeichnet, dass** die Laserquelle (4, 8, 10) so programmiert ist, dass der erste Impuls (P1), der mit dem ersten Einschlag des einfallenden Laserstrahls (6) auf dem Substrat (2) gebunden ist, ausgesendet wird, nachdem der einfallenden Laserstrahl (6) den Startpunkt (D) verlassen hat, um seine Bewegung relativ zu dem Substrat (2) zu beginnen, und dass der letzte Impuls (P4), der mit dem letzten Einschlag des einfallenden Laserstrahls (6) auf dem Substrat (2) gebunden ist, ausgesendet wird, bevor der einfallenden Laserstrahl (6) den Endpunkt (A) erreicht und seine Bewegung relativ zu dem Substrat (2) beendet hat.

2. Verfahren nach Anspruch 1, **dadurch gekennzeichnet, dass** die Anfangsperiode zwischen dem Beginn der Relativbewegung zwischen dem einfallenden Laserstrahl (6) und dem Substrat (2) und dem ersten Impuls (P1) eine Zeitverschiebung zwischen 2 und 20 µs, vorzugsweise zwischen 5 und 15 µs, definiert.

3. Verfahren nach Anspruch 1 oder 2, **dadurch gekennzeichnet, dass** die Endperiode zwischen dem letzten Impuls (P4) und dem Ende der Relativbewegung zwischen dem einfallenden Laserstrahl (6) und dem Substrat (2) eine Zeitverschiebung zwischen 5 und 50 µs, vorzugsweise zwischen 10 und 40 µs, definiert.

4. Verfahren nach einem der vorhergehenden Ansprüche, **dadurch gekennzeichnet,**
**dass** der Weg mindestens drei Phasen aufweist, eine erste Phase, die eine relative Beschleunigung zwischen dem einfallenden Laserstrahl (6) und dem Substrat (2) ist, eine zweite Phase, die eine Relativbewegung mit im Wesentlichen konstanter Geschwindigkeit ist, und eine dritte Phase, die eine relative Verzögerung ist, und
**dass** die Laserquelle (4, 8, 10) so programmiert ist, dass die Einschläge während der zweiten Phase einen im Wesentlichen konstanten Längsüberlappungsgrad zwischen 40 und 99% aufweisen, wobei der Längsüberlappungsgrad während der ersten und dritten Phase variabel ist.

5. Verfahren nach einem der vorhergehenden Ansprüche, **dadurch gekennzeichnet, dass** die Laserquelle (4, 8, 10) so programmiert ist, dass sie mindestens einen zweiten Vektor definiert, der so angeordnet ist, dass die jeweiligen Einschläge des ersten und zweiten Vektors einen lateralen Überlappungsgrad zwischen 40 und 99% aufweisen.

6. Verfahren nach einem der vorhergehenden Ansprüche, **dadurch gekennzeichnet, dass** der einfallende Laserstrahl (6) aus Impulsen besteht, die eine durchschnittliche Frequenz zwischen 100 und 1000 kHz aufweisen.

7. Verfahren nach einem der vorhergehenden Ansprüche, **dadurch gekennzeichnet, dass** der einfallende Laserstrahl (6) eine durchschnittliche Leistung zwischen 1 und 20 Watt, vorzugsweise zwischen 1 und 10 Watt, aufweist.

8. Verfahren nach einem der vorhergehenden Ansprüche, **dadurch gekennzeichnet, dass** die Laserquelle (4, 8, 10) so angeordnet ist, dass der einfallende Laserstrahl (6) eine Pulsenergie zwischen 1 und 50 µJ aufweist.

9. Verfahren nach einem der vorhergehenden Ansprüche, **dadurch gekennzeichnet, dass** die Laserquelle (4, 8, 10) so angeordnet ist, dass die Geschwindigkeit der Relativbewegung zwischen dem einfallenden Laserstrahl (6) und dem Substrat (2) zwischen 500 und 3000 mm/s liegt.

10. Verfahren nach einem der vorhergehenden Ansprüche, **dadurch gekennzeichnet, dass** das Substrat (2) eines oder mehrere der folgenden Materialien umfasst: Stähle, Edelstähle, Titan, Kupfer, Messing, Gold, Platin, Wolfram, Keramiken.

## Claims

1. Method of laser machining a substrate (2) for a watch component, by means of a laser source (4, 8, 10) designed to emit pulses (P1, ..., P4) of duration equal to or less than one picosecond and arranged to define an incident laser beam (6) movable relative to said substrate (2) and to perform engraving on the latter, comprising the steps consisting in:
- providing a metal or ceramic substrate (2) to be engraved,
- programming said laser source (4, 8, 10) to define at least a first engraving vector on said substrate (2), delimited by a starting point (D) and an end point (A), both located at the periphery of the engraving, and consisting of a path to be traversed by said incident laser beam (6) relative to said substrate (2) and of a series of impacts of said incident laser beam (6) on said substrate (2), along said path,
**characterized in that** said laser source (4, 8, 10) is programmed in such a way that the first pulse (P1) associated with the first impact of said incident laser beam (6) on said substrate (2) is emitted after said incident laser beam (6) has left said starting point (D) to begin its movement relative to said substrate (2), and that the last pulse (P4) associated with the last impact of said incident laser beam (6) on said substrate (2) is emitted before said incident laser beam (6) has reached said end point (A) and completed its movement relative to said substrate (2).

2. Method according to claim 1, **characterized in that** the initial period between the start of relative movement, between said incident laser beam (6) and said substrate (2), and said first pulse (P1) defines a time offset of between 2 and 20 µs, preferably between 5 and 15 µs.

3. Method according to claim 1 or 2, **characterized in that** the final period between said last pulse (P4) and the end of relative movement, between said incident laser beam (6) and said substrate (2), defines a time offset of between 5 and 50 µs, preferably between 10 and 40 µs.

4. Method according to one of the preceding claims, **characterized**
**in that** said path presents at least three phases, a first phase of relative acceleration between said incident laser beam (6) and said substrate (2), a second phase of relative movement at substantially constant speed, and a third phase of relative deceleration, and
**in that** said laser source (4, 8, 10) is programmed in such a way that said impacts present a substantially constant rate of longitudinal overlap during said second phase, of between 40 and 99%, the rate of longitudinal overlap being variable during the first and third phases.

5. Method according to one of the preceding claims, **characterized in that** said laser source (4, 8, 10) is programmed to define at least a second vector arranged in such a way that the respective impacts of said first and second vectors have a lateral overlap rate of between 40 and 99%.

6. Method according to one of the preceding claims, **characterized in that** said incident laser beam (6) is composed of pulses having an average frequency of between 100 and 1000 kHz.

7. Method according to one of the preceding claims, **characterized in that** said incident laser beam (6) has an average power of between 1 and 20 Watts, preferably between 1 and 10 Watts.

8. Method according to one of the preceding claims, **characterized in that** said laser source (4, 8, 10) is arranged in such a way that said incident laser beam (6) has a pulse energy of between 1 and 50 µJ.

9. Method according to one of the preceding claims, **characterized in that** said laser source (4, 8, 10) is arranged in such a way that the speed of relative movement between said incident laser beam (6) and said substrate (2) is between 500 and 3000 mm/s.

10. Method according to one of the preceding claims, **characterized in that** said substrate (2) comprises one or more materials taken from the group comprising: steels, including stainless steels, titanium, copper, brass, gold, platinum, tungsten, ceramics.
